# FASCICULE DE BREVET EUROPEEN

(11) **EP 0 368 736 B1**
(45) Date de publication et mention de la délivrance du brevet: **13.07.1994**
(21) Numéro de dépôt: 89403045.1
(22) Date de dépôt: 06.11.1989
(51) Int. Cl.: C12G 3/06

(54) **Nouvelles compositions éthanoliques comprenant de l'anéthole**
Anethol enthaltende ethanolische Zusammensetzungen
Ethanolic compositions comprising anethol

(30) Priorité: 07.11.1988 FR 8814501
(43) Date de publication de la demande: 16.05.1990
(73) Titulaire: PERNOD-RICARD, F-75008 Paris (FR)
(72) Inventeur: Brun, Bernard, F-34000 Montpellier (FR); Dupont, Pierre, D-94370 Sucy-en-Brie (FR)
(74) Mandataire: Warcoin, Jacques

(56) Documents cités:
- FR-A- 872 145
- FR-A- 2 165 029
- FR-A- 2 546 880
- US-A- 3 988 512

## Description

La présente invention concerne des compositions hydroéthanoliques limpides destinées à être diluées en provoquant un trouble, plus particulièrement l'invention concerne les pastis à bas degré alcoolique.

Les pastis sont des boissons apéritives constituées par une solution limpide d'anéthole dans l'éthanol. Les pastis les plus courants correspondent à des solutions à 2 g/l d'anéthole dans de l'éthanol à 45 % v/v.

Les consommateurs souhaitent pouvoir disposer de boissons de ce type à base d'anéthole mais dont la teneur en alcool serait inférieure à 45 %, par exemple des boissons contenant seulement 20 % d'alcool.

Pour des raisons touchant aux qualités organoleptiques de la boisson, il n'est pas possible de diminuer trop la concentration en anéthole qui doit rester voisine de 2 g/l. Dans ces conditions, il n'est pas possible de dissoudre 2 g/l d'anéthole dans l'alcool à 20 %, il se produit immédiatement un trouble, ce qui n'est pas acceptable commercialement pour ce type de produit. En outre, il faut tenir compte du fait que les boissons anisées, si elles doivent être limpides en bouteille, doivent se troubler par ajout d'eau, c'est-à-dire par dilution avec environ 5 volumes d'eau.

L'objet de la présente invention est une composition éthanolique limpide contenant de l'anéthole ou un composé du même type, caractérisée en ce qu'elle est constituée d'au moins un milieu hydroéthanolique contenant de 10 à 30 % d'éthanol v/v et 1 à 3 g/l d'anéthole et, en outre, d'une quantité efficace pour maintenir la composition limpide d'un agent tensio-actif ou d'un mélange d'agents tensio-actifs ayant les caractéristiques suivantes :
- il est acceptable dans l'alimention humaine,
- son HLB est 12 < HLB < 15,
- la CMC est 10⁻¹ > CMC > 10⁻³ mole/l,
le point de trouble étant supérieur à 30°C pour un agent tensio-actif non ionique et la température de Krafft étant inférieure à 10°C pour un agent tensio-actif ionique.

Ces compositions permettent d'obtenir des boissons à base d'anéthole présentant des degrés alcooliques pouvant varier de 10 à 30 % v/v qui demeurent limpides lorsqu'elles sont en bouteilles et se troublent lorsqu'on ajoute des quantités d'eau allant de 1 à 10 volumes d'eau.

Bien entendu, les compositions selon l'invention peuvent comporter d'autres composants, notamment du sucre.

La notion de HLB est bien connue dans le domaine des agents tensio-actifs, il s'agit de la balance hydrophilie-lipophilie.

Dans les compositions selon l'invention, en particulier pour des teneurs en alcool de l'ordre de 20 % et des concentrations en anéthole de l'ordre de 2 g/l, on utilisera de préférence des agents tensio-actifs ayant un HLB compris entre 13 et 14, de préférence de l'ordre de 13,5.

La CMC ou concentration micellaire critique correspond à la concentration à partir de laquelle les agents tensio-actifs ont la propriété de s'associer en micelles. Dans les compositions selon la présente invention, on utilisera de préférence des agents tensio-actifs ayant des CMC comprises entre 5.10⁻³ et 5.10⁻² mole/l.

Les propriétés de solubilité des agents tensio-actifs sont mesurées suivant la nature de l'agent tensio-actif, soit par sa température de Krafft pour les agents tensio-actifs ioniques, soit par son point de trouble pour les agents tensio-actifs non ioniques.

Dans les compositions de l'invention, on préférera utiliser des agents tensio-actifs ioniques ayant des températures de Krafft inférieures à 10°C, de préférence inférieures à 0°C, et des agents tensio-actifs non ioniques ayant des points de trouble supérieurs à 30°C, de préférence supérieurs à 50°C.

Les agents tensio-actifs utilisés peuvent appartenir à l'une quelconque des familles d'agents tensio-actifs : anioniques, cationiques, amphotères ou non ioniques.

Parmi les agents tensio-actifs préférés, il faut citer les agents tensio-actifs à base de polyoxyde d'éthylène, notamment ceux de formule générale R-O-(CH₂-CH₂-O-)ₙH où R peut être un radical alcoyle, notamment en C₇ à C₁₀, ou un radical aryle substitué, de préférence en position para, par des radicaux alcoyles, n variant de 5 à 15.

Le produit vendu sous la dénomination commerciale C8E5 par la société Nikkon où n = 5 et où R est un radical alcoylé saturé de formule C₈H₁₇ a permis d'obtenir une dissolution aisée de 2 g/l d'anéthole dans une solution hydroalcoolique à 20 % d'alcool éthylique. Cette solution se trouble par addition d'eau.

On peut également utiliser les sucroesters qui sont des agents émulsifiants autorisés dans l'alimentation humaine par la CEE sous le numéro d'additif E 473. Les sucroesters se composent essentiellement de mono et de diesters de saccharose des acides gras des huiles et graisses alimentaires. Généralement, ces acides gras sont à 16 ou 18 atomes de carbone, ce qui conduit à des produits de HLB trop faibles. Cependant, si on utilise des mono ou polyesters d'un sucre avec des acides gras à chaîne moyenne, 4 à 12 atomes de carbone, on peut préparer un sucroester présentant les caractéristiques physicochimiques nécessaires à l'application de l'invention.

Parmi ces sucroesters, il faut citer les esters de saccharose notamment avec les acides caproïque, caprylique, caprique et laurique.

Les exemples qui suivent ne présentent pas de caractère limitatif et permettent à l'homme de l'art de mieux comprendre la mise en oeuvre de l'invention et son intérêt.

### EXEMPLE 1

On réalise une solution limpide contenant 2 g/l d'anéthole dans une solution hydroéthanolique à 20 % v/v, l'agent tensio-actif est l'acétyl-benzène-sulfonate de lithium :
Tk < 0°C M = 276
CMC ≃ 16.10⁻³ mole.kg⁻¹
utilisé à 7,1 g/l.

Cette solution est limpide à 20°C.

Par dilution, elle se trouble si l'on ajoute 4 volumes d'eau.

### EXEMPLE 2

On réalise une solution limpide contenant 2 g/l d'anéthole dans une solution hydroalcoolique à 20 % v/v, l'agent tensio-actif non ionique est le C8E5 utilisé à 9,5 g/l :
HLB = 13,24 M = 350,5
CMC = 9,2.10⁻³ mole.l⁻¹
point de trouble > 50°C.

Cette solution limpide se trouble par dilution avec 4 volumes d'eau.

### EXEMPLE 3

On réalise une solution limpide contenant 2 g/l d'anéthole dans une solution hydroalcoolique à 25 % v/v, l'agent tensio-actif non ionique est le monocaprate de saccharose commercialisé par la société SIGMA sous le numéro S 1266, et utilisé à la dose de 25 g/l :
HLB = 13,75 M = 496
CMC et point de trouble non déterminés.

Cette solution limpide se trouble par dilution avec 4 volumes d'eau.

## Revendications (Revendications pour l'(les) Etat(s) contractant(s) suivant(s): AT, BE, CH, DE, FR, GB, IT, LI, LU, NL, SE)

1. Composition éthanolique limpide contenant de l'anéthole, caractérisée en ce qu'elle est constituée d'au moins un milieu hydroéthanolique contenant de 10 à 30 % d'éthanol v/v et 1 à 3 g/l d'anéthole et, en outre, d'une quantité efficace pour maintenir la composition limpide d'un agent tensio-actif ou d'un mélange d'agents tensio-actifs ayant les caractéristiques suivantes :
- il est acceptable dans l'alimentation humaine,
- sa balance hydrophilie-lipophile (HLB) est 12 < HLB < 15,
- sa concentration micellaire critique (CMC) est 10⁻¹ > CMC > 10⁻³ mole/l,
le point de trouble étant supérieur à 30°C pour un agent tensio-actif non ionique et la température de Krafft étant inférieure à 10°C pour un agent tensio-actif ionique.

2. Composition selon la revendication 1, caractérisée en ce que la HLB est 13 < HLB < 14.

3. Composition selon l'une des revendications 1 ou 2, caractérisée en ce que la température de Krafft de l'agent tensio-actif est inférieure à 0°C.

4. Composition selon l'une des revendications 1 ou 2, caractérisée en ce que le point de trouble de l'agent tensio-actif est supérieur à 50°C.

5. Composition selon l'une des revendications 1 ou 2, caractérisée en ce que la CMC est 5.10⁻³ < CMC < 5.10⁻², mole/l.

6. Composition selon la revendication 1, caractérisée en ce que l'agent tensio-actif est un composé de formule générale
R-O-(CH₂-CH₂-O)ₙH
où R peut être un radical alcoyle, notamment en C₇ à C₁₀ ou un radical aryle substitué, de préférence en position para, par des radicaux alcoyles, n variant de 5 à 15.

7. Composition selon la revendication 1, caractérisée en ce que l'agent tensio-actif est un mono ou polyester d'un sucre et d'acides gras comportant de 4 à 12 atomes de carbone.

8. Composition selon la revendication 7, caractérisée en ce que l'ose est choisi parmi les mono et les diesters de saccharose.

9. Composition selon l'une des revendications 7 et 8, caractérisée en ce que l'agent tensio-actif est choisi parmi les esters des acides caproïque, caprylique, caprique et laurique.

10. Composition selon l'une des revendications 1 à 9, caractérisée en ce qu'il s'agit d'une solution d'anéthole à environ 2 g/l dans une solution hydroéthanolique à 20 % v/v.

## Revendications (Revendications pour l'(les) Etat(s) contractant(s) suivant(s): ES)

1. Procédé de préparation d'une composition éthanolique limpide contenant de l'anéthole, caractérisée en ce qu'on mélange au moins un milieu hydroéthanolique contenant de 10 à 30% d'éthanol v/v et 1 à 3 gl/l d'anéthole et, en outre, une quantité efficace pour maintenir la composition limpide d'un agent tensio-actif ou d'un mélange d'agents tensio-actifs ayant les caractéristiques suivantes:
- il est acceptable dans l'alimentation humaine,
- sa balance hydrophilie-lipophilie (HLB) est 12 < HLB < 15,
- sa concentration micellaire critique (CMC) est 10⁻¹ > CMC >10⁻³ mole/l,
le point de trouble étant supérieur à 30°C pour un agent tensio-actif non ionique et la température de Krafft étant inférieure à 10°C pour un agent tensio-actif ionique.

2. Procédé selon la revendication 1, caractérisée en ce que la HLB est 13 < HLB < 14.

3. Procédé selon l'une des revendications 1 ou 2, caractérisée en ce que la température de Krafft de l'agent tensio-actif est inférieure à 0°C.

4. Procédé selon l'une des revendications 1 ou 2, caractérisée en ce que le point de trouble de l'agent tensio-actif est supérieur à 50°C.

5. Procédé selon l'une des revendications 1 ou 2, caractérisée en ce que la CMC est 5.10⁻³ < CMC < 5.10⁻², mole/l.

6. Procédé selon la revendication 1, caractérisée en ce que l'agent tensio-actif est un composé de formule générale
R-O-(CH₂-CH₂-O)ₙH
où R peut être un radical alcoyle, notamment en C₇ à C₁₀ ou un radical aryle substitué, de préférence en position para, par des radicaux alcoyles, n variant de 5 à 15.

7. Procédé selon la revendication 1, caractérisée en ce que l'agent tensio-actif est un mono ou polyester d'un sucre et d'acides gras comportant de 4 à 12 atomes de carbone.

8. Procédé selon la revendication 7, caractérisée en ce que l'ose est choisi parmi les mono et les diesters de saccharose.

9. Procédé selon l'une des revendications 7 et 8, caractérisée en ce que l'agent tensio-actif est choisi parmi les esters des acides caproïque, caprylique, caprique et laurique.

10. Procédé selon l'une des revendications 1 à 9, caractérisée en ce qu'il s'agit d'une solution d'anéthole à environ 2 g/l dans une solution hydroéthanolique à 20 % v/v.

## Claims (Claims for the following Contracting State(s): AT, BE, CH, DE, FR, GB, GR, IT, LI, LU, NL, SE)

1. A clear ethanolic composition containing anethole, which is constituted of at least one water-ethanol medium containing from 10 to 30% v/v of ethanol and 1 to 3 g/l of anethole and, in addition, of a quantity, which is effective to keep the composition clear, of a surfactant or of a mixture of surfactants having the following characteristics:
- it is acceptable in human foodstuffs,
- its hydrophilic-lipophilic balance, (HLB) is 12 < HLB < 15,
- the critical micellar concentration (CMC) is 10⁻¹ > CMC > 10⁻³ mole/l
the haze point being greater than 30°C for a non-ionic surfactant and the Krafft temperature being less than 10°C for an ionic surfactant.

2. The composition as claimed in claim 1, wherein the HLB is 13 < HLB < 14.

3. The composition as claimed in one of claims 1 or 2, wherein the Krafft temperature of the surfactant is less than 0°C.

4. The composition as claimed in one of claims 1 or 2, wherein the haze point of the surfactant is greater than 50°C.

5. The composition as claimed in one of claims 1 or 2, wherein the CMC is 5 x 10⁻³ < CMC < 5 x 10⁻² mole/l.

6. The composition as claimed in claim 1, wherein the surfactant is a compound of general formula
R-O-(CH₂-CH₂-O)ₙH
where R can be an alkyl radical, in particular a C₇ to C₁₀ alkyl radical, or an aryl radical substituted, preferably in the para-position, by alkyl radicals, n varying from 5 to 15.

7. The composition as claimed in claim 1, wherein the surfactant is a mono- or polyester of a sugar and of fatty acids containing from 4 to 12 carbon atoms.

8. The composition as claimed in claim 7, wherein the sucrose is chosen from the sucrose mono- and diesters.

9. The composition as claimed in one of claims 7 and 8, wherein the surfactant is chosen from the esters of caproic, caprylic, capric and lauric acids.

10. The composition as claimed in one of claims 1 to 9, which is a solution of anethole at about 2 g/l in a 20% v/v water-ethanol solution.

## Claims (Claims for the following Contracting State(s): ES)

1. Process for preparing a clear ethanolic composition containing anethole characterized in that one admixes at least one water-ethanol medium containing from 10 to 30% v/v of ethanol and 1 to 3 g/l of anethole and, in addition, of a quantity, which is effective to keep the composition clear, of a surfactant or of a mixture of surfactants having the following characteristics:
- it is acceptable in human foodstuffs,
- its hydrophilic-lipophilic balance (HLB) is 12 < HLB < 15,
- the critical micellar concentration (CMC) is 10⁻¹ > CMC > 10⁻³ mole/l
the haze point being greater than 30°C for a non-ionic surfactant and the Krafft temperature being less than 10°C for an ionic surfactant.

2. The process as claimed in claim 1, wherein the HLB is 13 < HLB < 14.

3. The composition as claimed in one of claims 1 or 2, wherein the Krafft temperature of the surfactant is less than 0°C.

4. The process as claimed in one of claims 1 or 2, wherein the haze point of the surfactant is greater than 50°C.

5. The process as claimed in one of claims 1 or 2, wherein the CMC is 5 x 10⁻³ < CMC < 5 x 10⁻².

6. The process as claimed in claim 1, wherein the surfactant is a compound of general formula
R-O-(CH₂-CH₂-O)ₙH
where R can be an alkyl radical, in particular a C₇ to C₁₀ alkyl radical, or an aryl radical substituted, preferably in the para-position, by alkyl radicals, n varying from 5 to 15.

7. The process as claimed in claim 1, wherein the surfactant is a mono- or polyester of a sugar and of fatty acids containing from 4 to 12 carbon atoms.

8. The composition as claimed in claim 7, wherein the sucrose is chosen from the sucrose mono- and diesters.

9. The process as claimed in one of claims 7 and 8, wherein the surfactant is chosen from the esters of caproic, caprylic, capric and lauric acids.

10. The process as claimed in one of claims 1 to 9, which is a solution of anethole at about 2 g/l in a 20% v/v water-ethanol solution.

## Patentansprüche (Patentansprüche für folgende(n) Vertragsstaat(en): AT, BE, CH, DE, FR, GB, GR, IT, LI, LU, NL, SE)

1. Klare, Anethol enthaltende ethanolische Zusammensetzung, dadurch gekennzeichnet, daß sie aus mindestens einem wäßrig-ethanolischen Milieu, das 10 bis 30% (Vol./Vol.) Ethanol und 1 bis 3 g/l Anethol enthält und außerdem aus einer zum Aufrechterhalten der klaren Zusammensetzung wirksamen Menge eines oberflächenaktiven Mittels oder einer Mischung von oberflächenaktiven Mitteln besteht, die folgende Merkmale aufweisen:
- sie sind für die menschliche Ernährung geeignet,
- ihr hydrophil-lipophiles Gleichgewicht (HLB) beträgt 12 < HLB < 15.
- ihre kritische micelläre Konzentration (CMC) beträgt 10⁻¹ > CMC > 10⁻³ mol/l,
wobei der Trübungspunkt für ein nichtionisches oberflächenaktives Mittel oberhalb von 30 °C liegt und die Krafft-Temperatur für ein ionisches oberflächenaktives Mittel unterhalb von 10 °C liegt.

2. Zusammensetzung nach Anspruch 1, dadurch gekennzeichnet, daß das HLB 13 < HLB < 14 beträgt.

3. Zusammensetzung nach einem der Ansprüche 1 oder 2, dadurch gekennzeichnet, daß die Krafft-Temperatur des oberflächenaktiven Mittels unterhalb von 0 °C liegt.

4. Zusammensetzung nach einem der Ansprüche 1 oder 2, dadurch gekennzeichnet, daß der Trübungspunkt des oberflächenaktiven Mittels oberhalb von 50 °C liegt.

5. Zusammensetzung nach einem der Ansprüche 1 oder 2, dadurch gekennzeichnet, daß die CMC 5·10⁻³ < CMC < 5·10⁻² mol/l beträgt.

6. Zusammensetzung nach Anspruch 1, dadurch gekennzeichnet, daß das oberflächenaktive Mittel eine Verbindung der allgemeinen Formel
R-O-(CH₂-CH₂-O)ₙH
ist, worin R ein Alkylrest sein kann, insbesondere mit 7 bis 10 Kohlenstoffatomen, oder ein vorzugsweise in para-Stellung durch Alkylreste substituierter Arylrest, und n zwischen 5 und 15 schwanken kann.

7. Zusammensetzung nach Anspruch 1, dadurch gekennzeichnet, daß das oberflächenaktive Mittel ein Mono- oder Polyester von einem Zuckers und Fettsäuren ist, die 4 bis 12 Kohlenstoffatome umfassen.

8. Zusammensetzung nach Anspruch 7, dadurch gekennzeichnet, daß die Ose unter den Mono- und Diestern von Saccharose ausgewählt wird.

9. Zusammensetzung nach einem der Ansprüche 7 und 8, dadurch gekennzeichnet, daß das oberflächenaktive Mittel unter den Estern von Capronsäure, Caprylsäure, Caprinsäure und Laurinsäure ausgewählt wird.

10. Zusammensetzung nach einem der Ansprüche 1 bis 9, dadurch gekennzeichnet, daß es sich um eine Lösung von Anethol von etwa 2 g/l in einer wäßrig-ethanolischen Lösung (20%, Vol./Vol.) handelt.

## Patentansprüche (Patentansprüche für folgende(n) Vertragsstaat(en): ES)

1. Verfahren zur Herstellung einer klaren, Anethol enthaltenden ethanolischen Zusammensetzung, dadurch gekennzeichnet, daß man mindestens ein wäßrig-ethanolisches Milieu, das 10 bis 30% (Vol./Vol.) Ethanol und 1 bis 3 g/l Anethol enthält und außerdem eine zum Aufrechterhalten der klaren Zusammensetzung wirksame Menge eines oberflächenaktiven Mittels oder einer Mischung von oberflächenaktiven Mitteln mischt, die folgende Merkmale aufweisen:
- sie sind für die menschliche Ernährung geeignet,
- ihr hydrophil-lipophiles Gleichgewicht (HLB) beträgt 12 < HLB < 15,
- ihre kritische micelläre Konzentration (CMC) beträgt 10⁻¹ > CMC > 10⁻³ mol/l,
wobei der Trübungspunkt für ein nichtionisches oberflächenaktives Mittel oberhalb von 30 °C liegt und die Krafft-Temperatur für ein ionisches oherflächenaktives Mittel unterhalb von 10 °C liegt.

2. Verfahren nach Anspruch 1, dadurch gekennzeichnet, daß das HLB 13 < HLB < 14 beträgt.

3. Verfahren nach einem der Ansprüche 1 oder 2, dadurch gekennzeichnet, daß die Krafft-Temperatur des oberflächenaktiven Mittels unterhalb von 0 °C liegt.

4. Verfahren nach einem der Ansprüche 1 oder 2, dadurch gekennzeichnet, daß der Trübungspunkt des oberflächenaktiven Mittels oberhalb von 50 °C liegt.

5. Verfahren nach einem der Ansprüche 1 oder 2, dadurch gekennzeichnet, daß die CMC 5·10⁻³ < CMC < 5·10⁻² mol/l beträgt.

6. Verfahren nach Anspruch 1, dadurch gekennzeichnet, daß das oberflächenaktive Mittel eine Verbindung der allgemeinen Formel
R-O-(CH₂-CH₂-O)ₙH
ist, worin Rein Alkylrest sein kann, insbesondere mit 7 bis 10 Kohlenstoffatomen, oder ein vorzugsweise in para-Stellung durch Alkylreste substituierter Arylrest, und n zwischen 5 und 15 schwanken kann.

7. Verfahren nach Anspruch 1, dadurch gekennzeichnet, daß das oberflächenaktive Mittel ein Mono- oder Polyester von einem Zuckers und Fettsäuren ist, die 4 bis 12 Kohlenstoffatome umfassen.

8. Verfahren nach Anspruch 7, dadurch gekennzeichnet, daß die Ose unter den Mono- und Diestern von Saccharose ausgewählt wird.

9. Verfahren nach einem der Ansprüche 7 und 8, dadurch gekennzeichnet, daß das oberflächenaktive Mittel unter den Estern von Capronsäure, Caprylsäure, Caprinsäure und Laurinsäure ausgewählt wird.

10. Verfahren nach einem der Ansprüche 1 bis 9, dadurch gekennzeichnet, daß es sich um eine Lösung von Anethol von etwa 2 g/l in einer wäßrig-ethanolischen Lösung (20 %. Vol./Vol.) handelt.
